# EUROPEAN PATENT APPLICATION

(11) **EP 4 819 714 A1**
(43) Date of publication of application: **07.10.2026**
(21) Application number: 24899409.7
(22) Date of filing: 18.09.2024
(51) Int. Cl.: H04W 72/044

(54) **COMMUNICATION METHOD AND COMMUNICATION APPARATUS**

(30) Priority: 08.12.2023 CN 202311689377
(71) Applicant: Huawei Technologies Co., Ltd., Shenzhen, Guangdong 518129 (CN)
(72) Inventor: ZHANG, Xi, Shenzhen, Guangdong 518129 (CN); BI, Xiaoyan, Shenzhen, Guangdong 518129 (CN); MA, Jianglei, Shenzhen, Guangdong 518129 (CN); TONG, Wen, Shenzhen, Guangdong 518129 (CN)
(74) Representative: Maiwald GmbH
(86) International application number: PCT/CN2024/119492
(87) International publication number: WO 2025/118763

(57) **Abstract**

This application provides a communication method and a communication apparatus. In this solution, a terminal device performs beam measurement on a beam other than a serving beam in a serving beam group while performing beam failure detection on the serving beam. In other words, the two operations, that is, beam failure detection and candidate beam detection, are performed at the same time. Compared with a solution in which beam failure detection is first performed and candidate beam detection is performed only after it is determined that a serving beam fails, in this solution in this application, latency of a beam failure recovery procedure can be reduced. In addition, when the terminal device sends at least one beam failure recovery request to a network device, a success rate of beam failure recovery can be further improved.

## Description

### CROSS-REFERENCE TO RELATED APPLICATIONS

This application claims priority to Chinese Patent Application No. 202311689377.8, filed with the China National Intellectual Property Administration on December 8, 2023 and entitled "COMMUNICATION METHOD AND COMMUNICATION APPARATUS", which is incorporated herein by reference in its entirety.

### TECHNICAL FIELD

This application relates to the field of communication technologies, and in particular, to a communication method and a communication apparatus.

### BACKGROUND

Due to the relatively high path loss in millimeter-wave and terahertz frequency bands, beamforming techniques are typically used to concentrate signal energy for transmission in a specific direction or receive energy from a specific direction, to extending a coverage range. As a result of beamforming at both a transmitting side and a receiving side, communication links are susceptible to blockage, resulting in interruption. Therefore, 5th generation (5th generation, 5G) standards introduce a beam failure recovery procedure, in which available beams are dynamically maintained by continuously detecting beam quality, searching for candidate beams, sending a beam failure recovery request, and receiving a beam failure recovery response, to improve stability of the communication links.

The current beam failure recovery procedure is as follows: A terminal device performs beam failure detection (beam failure detection, BFD), and starts to perform candidate beam detection (candidate beam detection, CBD) upon determining that a beam failure has occurred. After selecting a candidate beam, the terminal device sends a beam failure recovery request (beam failure recovery request, BFRQ) to a network device, to request to use the selected candidate beam. Then, the network device sends a beam failure recovery response (beam failure recovery response, BFRR) to the terminal device, to indicate confirmation to use the selected candidate beam.

For the foregoing beam failure recovery procedure, how to reduce detection latency and improve a success rate of beam failure recovery is to be studied.

### SUMMARY

Embodiments of this application provide a communication method and a communication apparatus, to reduce detection latency of a beam failure recovery procedure and improve a success rate of beam failure recovery.

According to a first aspect, an embodiment of this application provides a communication method. The method may be performed by a terminal device or a module (for example, a chip) in the terminal device. The method includes: performing beam failure detection on a serving beam in a serving beam group, and performing beam measurement on a beam other than the serving beam in the serving beam group; and when the serving beam fails and a measurement result of at least one first beam in the serving beam group meets a first condition, sending, to a network device, at least one beam failure recovery request corresponding to the at least one first beam.

In the foregoing solution, the terminal device performs beam measurement on the beam other than the serving beam in the serving beam group while performing beam failure detection on the serving beam. In other words, the two operations, that is, beam failure detection and candidate beam detection, are performed at the same time. Compared with a solution in which beam failure detection is first performed and candidate beam detection is performed only after it is determined that a serving beam fails, in this solution in this application, latency of a beam failure recovery procedure can be reduced. In addition, when the terminal device sends the at least one beam failure recovery request to the network device, a success rate of beam failure recovery can be further improved.

In a possible implementation, the method further includes: detecting a beam failure recovery response in common search space associated with the at least one first beam.

In a possible implementation, beams in the serving beam group are concurrent beams.

In a possible implementation, the first condition includes at least one of the following: the measurement result of the first beam is greater than a first threshold; and the at least one first beam includes a plurality of first beams, and a difference between measurement results of any two of the plurality of first beams is less than a second threshold.

In the foregoing solution, a beam whose measurement result is greater than the threshold is selected for beam recovery, to help improve the success rate of beam recovery.

In a possible implementation, the method further includes: when the serving beam fails and measurement results of the beams in the serving beam group do not meet the first condition, performing beam measurement on a beam in a first candidate beam group; and when a measurement result of at least one second beam in the first candidate beam group meets a second condition, sending, to the network device, at least one beam failure recovery request corresponding to the at least one second beam.

In the foregoing solution, when the terminal device sends the at least one beam failure recovery request to the network device, the success rate of beam failure recovery can be improved.

In a possible implementation, the method further includes: detecting a beam failure recovery response in common search space associated with the at least one second beam.

In a possible implementation, the second condition includes at least one of the following: the measurement result of the second beam is greater than a third threshold; and the at least one second beam includes a plurality of second beams, and a difference between measurement results of any two of the plurality of second beams is less than a fourth threshold.

In a possible implementation, the first candidate beam group is a candidate beam group having a largest spatial angle distance among at least one candidate beam group, where the spatial angle distance is a distance between any angle within half-power coverage of the candidate beam group and an angle center of the serving beam group; the spatial angle distance is a distance between any angle within half-power coverage of the candidate beam group and an angle center of the serving beam; the spatial angle distance is a distance between an angle center of the candidate beam group and an angle center of the serving beam group; or the spatial angle distance is a distance between an angle center of the candidate beam group and an angle center of the serving beam.

In a possible implementation, the method further includes: receiving configuration information from the network device, where the configuration information indicates information about a plurality of beam groups, the information about the plurality of beam groups includes identification information of beams in the plurality of beam groups, or includes identification information and spatial angle information of beams in the plurality of beam groups, and the plurality of beam groups include the serving beam group and the at least one candidate beam group.

In a possible implementation, a spatial angle distance between any two beams in each of the plurality of beam groups is less than a fifth threshold; a spatial angle distance between any two beams in each of the plurality of beam groups is greater than a sixth threshold; or beams in each of the plurality of beam groups are concurrent beams.

According to a second aspect, an embodiment of this application provides a communication method. The method may be performed by a network device or a module (for example, a chip) in the network device. The method includes: sending configuration information to a terminal device, where the configuration information indicates information about a plurality of beam groups, the information about the plurality of beam groups includes identification information of beams in the plurality of beam groups, or includes identification information and spatial angle information of beams in the plurality of beam groups, and the plurality of beam groups include a serving beam group and at least one candidate beam group of the terminal device; and receiving, from the terminal device, at least one beam failure recovery request corresponding to at least one first beam in the serving beam group, where a measurement result of the at least one first beam meets a first condition; or receiving, from the terminal device, at least one beam failure recovery request corresponding to at least one second beam in a first candidate beam group, where a measurement result of the at least one second beam meets a second condition, and the first candidate beam group belongs to the at least one candidate beam group.

In the foregoing solution, when the terminal device sends the at least one beam failure recovery request to the network device, a success rate of beam failure recovery can be improved.

In a possible implementation, beams in the serving beam group are concurrent beams.

In a possible implementation, the first condition includes at least one of the following: the measurement result of the first beam is greater than a first threshold; and the at least one first beam includes a plurality of first beams, and a difference between measurement results of any two of the plurality of first beams is less than a second threshold.

In a possible implementation, the second condition includes at least one of the following: the measurement result of the second beam is greater than a third threshold; and the at least one second beam includes a plurality of second beams, and a difference between measurement results of any two of the plurality of second beams is less than a fourth threshold.

In a possible implementation, the first candidate beam group is a candidate beam group having a largest spatial angle distance among the at least one candidate beam group, where the spatial angle distance is a distance between any angle within half-power coverage of the candidate beam group and an angle center of the serving beam group; the spatial angle distance is a distance between any angle within half-power coverage of the candidate beam group and an angle center of a serving beam in the serving beam group; the spatial angle distance is a distance between an angle center of the candidate beam group and an angle center of the serving beam group; or the spatial angle distance is a distance between an angle center of the candidate beam group and an angle center of a serving beam in the serving beam group.

In a possible implementation, a spatial angle distance between any two beams in each of the plurality of beam groups is less than a fifth threshold; a spatial angle distance between any two beams in each of the plurality of beam groups is greater than a sixth threshold; or beams in each of the plurality of beam groups are concurrent beams.

In a possible implementation, receiving, from the terminal device, the at least one beam failure recovery request corresponding to the at least one first beam in the serving beam group includes: receiving the at least one beam failure recovery request on at least one random access channel (random access channel, RACH), where the at least one RACH is in a one-to-one correspondence with the at least one first beam. The method further includes: sending, to the terminal device in common search space corresponding to at least one target beam in the at least one first beam, at least one beam failure recovery response corresponding to the at least one target beam, where a sequence correlation value of a RACH corresponding to the at least one target beam is greater than a sequence threshold.

In a possible implementation, receiving, from the terminal device, the at least one beam failure recovery request corresponding to the at least one second beam in the first candidate beam group includes: receiving the at least one beam failure recovery request on at least one RACH, where the at least one RACH is in a one-to-one correspondence with the at least one second beam. The method further includes: sending, to the terminal device in common search space corresponding to at least one target beam in the at least one second beam, at least one beam failure recovery response corresponding to the at least one target beam, where a sequence correlation value of a RACH corresponding to the at least one target beam is greater than a sequence threshold.

According to a third aspect, an embodiment of this application provides a communication apparatus. The apparatus may be a terminal device, or may be a module (for example, a chip) in the terminal device. The apparatus has a function of implementing any one of the implementations according to the first aspect. The function may be implemented by hardware, or may be implemented by hardware executing corresponding software. The hardware or the software includes one or more modules corresponding to the function.

According to a fourth aspect, an embodiment of this application provides a communication apparatus. The apparatus may be a network device, or may be a module (for example, a chip) in the network device. The apparatus has a function of implementing any one of the implementations according to the second aspect. The function may be implemented by hardware, or may be implemented by hardware executing corresponding software. The hardware or the software includes one or more modules corresponding to the function.

According to a fifth aspect, an embodiment of this application provides a communication apparatus. The apparatus includes a unit or means configured to perform steps of any one of the implementations according to the first aspect and the second aspect.

According to a sixth aspect, an embodiment of this application provides a communication apparatus. The apparatus includes a processor and an interface circuit. The processor is configured to: communicate with another apparatus through the interface circuit, and perform any one of the implementations according to the first aspect and the second aspect. There are one or more processors.

Optionally, the communication apparatus may further include a memory configured to store computer instructions. The memory is coupled to the processor, and the processor executes the computer instructions stored in the memory, to enable the apparatus to perform any one of the implementations according to the first aspect and the second aspect.

According to a seventh aspect, an embodiment of this application further provides a computer program product. The computer program product includes a computer program or instructions, and when the computer program or the instructions are run by a communication apparatus, any one of the implementations according to the first aspect and the second aspect is performed.

According to an eighth aspect, an embodiment of this application further provides a computer-readable storage medium. The computer-readable storage medium stores instructions, and when the instructions are run on a communication apparatus, any one of the implementations according to the first aspect is performed.

According to a ninth aspect, an embodiment of this application further provides a chip system. The chip system includes a processor, configured to perform any one of the implementations according to the first aspect and the second aspect.

### BRIEF DESCRIPTION OF DRAWINGS

FIG. 1(a) is a diagram of an architecture of a communication system to which an embodiment of this application is applied;
FIG. 1(b) is a diagram of a network device;
FIG. 2 is a schematic flowchart of a communication method according to an embodiment of this application;
FIG. 3 is an example diagram of beam grouping;
FIG. 4 is another example diagram of beam grouping;
FIG. 5 is an example diagram of a spatial angle distance;
FIG. 6 is another example diagram of a spatial angle distance;
FIG. 7 is another example diagram of a spatial angle distance;
FIG. 8 is another example diagram of a spatial angle distance;
FIG. 9 is a diagram of a structure of a communication apparatus according to an embodiment of this application; and
FIG. 10 is a diagram of a structure of a communication apparatus according to an embodiment of this application.

### DESCRIPTION OF EMBODIMENTS

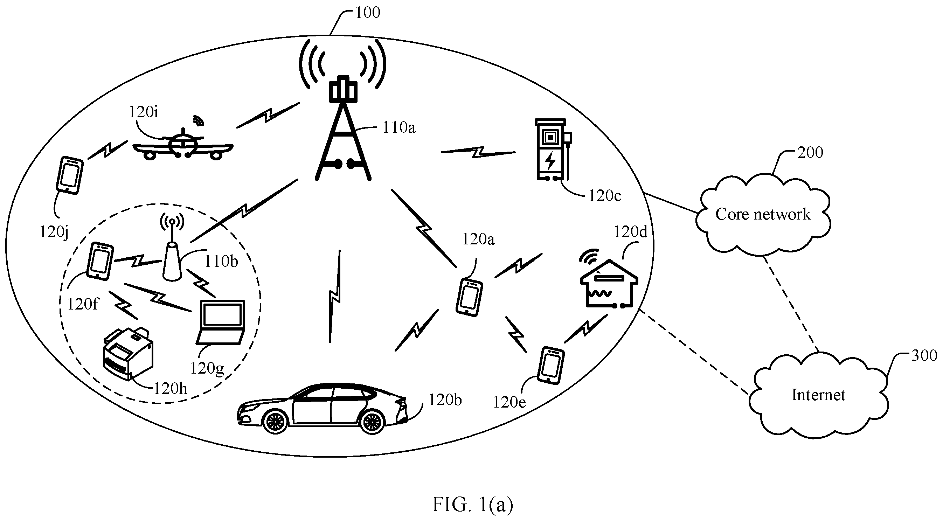

FIG. 1(a) is a diagram of an architecture of a communication system to which an embodiment of this application is applied. The communication system shown in FIG. 1(a) includes a radio access network 100 and a core network 200. Optionally, the communication system further includes internet 300. The radio access network 100 may include at least one network device (for example, 110a and 110b in FIG. 1(a)), and may further include at least one terminal device (for example, 120a to 120j in FIG. 1(a)). The terminal device is connected to the network device in a wireless manner, and the network device is connected to the core network in a wireless or wired manner. A core network device and the network device may be different physical devices that are independent of each other, or functions of the core network device and logical functions of the network device may be integrated into a same physical device, or a part of functions of the core network device and a part of functions of the network device may be integrated into one physical device. Terminal devices may be connected to each other in a wired or wireless manner, and network devices may be connected to each other in a wired or wireless manner. FIG. 1(a) is only a diagram. The communication system may further include another network device, for example, may further include a wireless relay device and a wireless backhaul device, which are not shown in FIG. 1(a).

The network device is an access device for the terminal device to access the communication system in a wired or wireless manner. The network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like; or may be a module or a unit that completes a part of functions of the base station, for example, may be a central unit (central unit, CU), a distributed unit (distributed unit, DU), or a radio unit (radio unit, RU). The network device may be a macro base station (for example, 110a in FIG. 1(a)), may be a micro base station or an indoor base station (for example, 110b in FIG. 1(a)), or may be a relay node, a donor node, or the like. A specific technology and a specific device form that are used by the network device are not limited in embodiments of this application.

The terminal device is a device having a wireless transceiver function, and may send a signal to the network device, or receive a signal from the network device. The terminal device includes but is not limited to a terminal apparatus, a terminal, user equipment (user equipment, UE), a mobile station, a mobile terminal, and the like. The terminal device may be widely used in various scenarios, such as device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, self-driving, telemedicine, smart grid, smart furniture, smart office, smart wearable, intelligent transportation, and smart city. The terminal device may be specifically a mobile phone, a tablet computer, a computer having a wireless transceiver function, a wearable device, a vehicle, an airplane, a ship, a robot, a robot arm, a smart home device, or the like. A specific technology and a specific device form that are used by the terminal device are not limited in embodiments of this application.

The network device and the terminal device may be fixed at a location, or may be movable. The network device and the terminal device may be deployed on land, including being deployed indoors or outdoors, or in a handheld manner or a vehicle-mounted manner; may be deployed on water; or may be deployed on an airplane, a balloon, and an artificial satellite. Application scenarios of the network device and the terminal device are not limited in embodiments of this application.

Roles of the network device and the terminal device may be relative. For example, a helicopter or an unmanned aerial vehicle 120i in FIG. 1(a) may be configured as a mobile network device. For the terminal device 120j that accesses the radio access network 100 through 120i, the terminal device 120i is a network device. However, for the network device 110a, 120i is a terminal device, in other words, 110a and 120i communicate with each other according to a radio air interface protocol. Certainly, 110a and 120i may alternatively communicate with each other according to an interface protocol between network devices. In this case, for 110a, 120i is also a network device. Therefore, both the network device and the terminal device may be collectively referred to as communication apparatuses. 110a and 110b in FIG. 1(a) may be referred to as communication apparatuses having functions of the network device, and 120a to 120j in FIG. 1(a) may be referred to as communication apparatuses having functions of the terminal device.

Communication between the network device and the terminal device, between network devices, or between terminal devices may be performed by using a licensed spectrum, an unlicensed spectrum, or both a licensed spectrum and an unlicensed spectrum; may be performed by using a spectrum below 6 gigahertz (gigahertz, GHz); may be performed by using a spectrum above 6 GHz; or may be performed by using both a spectrum below 6 GHz and a spectrum above 6 GHz. A spectrum resource for wireless communication is not limited in embodiments of this application.

In embodiments of this application, the functions of the network device may be performed by a module (for example, a chip) in the network device, or may be performed by a control subsystem including the functions of the network device. Herein, the control subsystem including the functions of the network device may be a control center in the foregoing application scenarios such as smart grid, industrial control, intelligent transportation, and smart city. The functions of the terminal device may be performed by a module (for example, a chip or a modem) in the terminal device, or may be performed by an apparatus including the functions of the terminal device.

In this application, the network device sends a downlink signal or downlink information to the terminal device, where the downlink information is carried on a downlink channel; and the terminal device sends an uplink signal or uplink information to the network device, where the uplink information is carried on an uplink channel. To communicate with the network device, the terminal device needs to establish a wireless connection to a cell controlled by the network device. The cell that establishes the wireless connection to the terminal device is referred to as a serving cell of the terminal device.

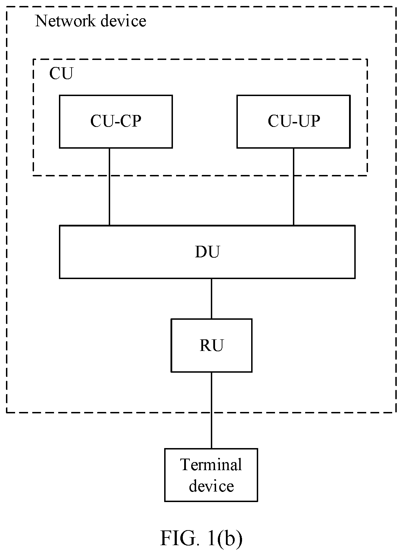

FIG. 1(b) is a diagram of a network device. As shown in FIG. 1(b), the network device includes one or more CUs, one or more DUs, and one or more RUs. For clarity, FIG. 1(b) shows only one CU, one DU, and one RU. The CU is configured to connect to a core network and the one or more DUs. Optionally, the CU may have a part of functions of the core network. The CU may include a CU-control plane (control plane, CP) and a CU-user plane (user plane, UP).

The CU and the DU may be configured based on a protocol layer function of a wireless network implemented by the CU and the DU. For example, the CU is configured to implement functions of a packet data convergence protocol (packet data convergence protocol, PDCP) layer and a protocol layer above the PDCP layer (for example, a radio resource control (radio resource control, RRC) layer and/or a service data adaptation protocol (service data adaptation protocol, SDAP) layer). The DU is configured to implement a function of a protocol layer below the PDCP layer (for example, a radio link control (radio link control, RLC) layer, a medium access control (medium access control, MAC) layer, and/or a physical (physical, PHY) layer). For another example, the CU is configured to implement a function of a protocol layer above a PDCP layer (for example, an RRC layer and/or an SDAP layer), and the DU is configured to implement functions of the PDCP layer and a protocol layer below the PDCP layer (for example, an RLC layer, a MAC layer, and/or a PHY layer).

The foregoing configuration of the CU and the DU is merely an example. Alternatively, functions of the CU and the DU may be configured as required. For example, the CU or the DU may be configured to have functions of more protocol layers, or the CU or the DU may be configured to have a part of processing functions of protocol layers. For example, a part of functions of the RLC layer and a function of a protocol layer above the RLC layer are set on the CU, and remaining functions of the RLC layer and a function of a protocol layer below the RLC layer are set on the DU. For another example, the functions of the CU or the DU may be divided based on service types or other system requirements. For example, division may be performed based on latencies. Functions whose processing time needs to satisfy a low-latency requirement are set on the DU, and functions whose processing time does not need to satisfy the latency requirement are set on the CU.

The DU and the RU may work together to implement a function of the PHY layer. One DU may be connected to one or more RUs. Functions of the DU and the RU may be configured into a plurality of manners based on a design. For example, the DU is configured to implement a baseband function, and the RU is configured to implement an intermediate radio frequency function. For another example, the DU is configured to implement a higher-layer function of the PHY layer, and the RU is configured to implement a lower-layer function of the PHY layer or implement the lower-layer function and a radio frequency function. The higher-layer function of the physical layer may include a part of functions of the physical layer, and the part of functions are closer to the MAC layer. The lower-layer function of the physical layer may include another part of functions of the physical layer, and the part of functions are closer to an intermediate radio frequency side.

The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). In different systems, the CU, the DU, or the RU may have different names, but a person skilled in the art may understand meanings thereof. For example, in an ORAN system, a CU may also be referred to as an O-CU (open CU), a DU may also be referred to as an O-DU, and an RU may also be referred to as an O-RU. Any one of the CU (or the CU-CP or the CU-UP), the DU, and the RU in this application may be implemented by using a software module, a hardware module, or a combination of a software module and a hardware module.

For ease of understanding embodiments of this application, several descriptions are first provided in this application.
1. A beam may be understood as a spatial filter (spatial filter) or a spatial parameter (spatial parameter). A beam used to send a signal may be referred to as a transmit beam (transmission beam, Tx beam), and may be a spatial transmit filter (spatial domain transmit filter) or a spatial transmit parameter (spatial transmit parameter, spatial Tx parameter). A beam used to receive a signal may be referred to as a receive beam (reception beam, Rx beam), and may be a spatial receive filter (spatial domain receive filter) or a spatial receive parameter (spatial receive parameter, spatial Rx parameter).

A technology for forming the beam may be a beamforming technology or another technology. For example, the beamforming technology may be specifically a digital beamforming technology, an analog beamforming technology, a hybrid digital/analog beamforming technology, or the like. The transmit beam may refer to signal strength distribution formed in different directions in space after a signal is transmitted through an antenna, and the receive beam may refer to signal strength distribution in different directions in space of a radio signal received from an antenna.

In a new radio (new radio, NR) protocol, a beam may be, for example, a spatial filter (spatial filter). However, it should be understood that this application does not exclude a possibility of defining another term in a future protocol to represent a same or similar meaning.

Information about the beam may be identified by using index information. Optionally, the index information may correspond to a resource identity (identity, ID) configured for UE. For example, the index information may correspond to an ID or a resource configured for a channel state information-reference signal (Channel status information-Reference Signal, CSI-RS), or an ID or a resource configured for an uplink sounding reference signal (Sounding Reference Signal, SRS).

If a plurality of beams may be concurrent, the plurality of beams may be referred to as concurrent beams. The "concurrent" herein refers to simultaneously sending data or signaling, or simultaneously receiving data or signaling. To be specific, the plurality of beams may be used to send data or signaling in a same time unit or receive data or signaling in a same time unit. The time unit may be, for example, a symbol, a slot, or a subframe.

2. In this application, the "indication" may include a direct indication, an indirect indication, an explicit indication, and an implicit indication. When a piece of indication information is described as indicating A, it may be understood that the indication information carries A, directly indicates A, or indirectly indicates A.

In this application, information indicated by the indication information is referred to as to-be-indicated information. In a specific implementation process, there are many manners of indicating the to-be-indicated information. For example, the manners include but are not limited to a manner in which the to-be-indicated information, for example, the to-be-indicated information or an index of the to-be-indicated information, may be directly indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. In addition, the to-be-indicated information may be sent as a whole, or may be divided into a plurality of pieces of sub-information for separate sending, where sending periodicities and/or sending occasions of these pieces of sub-information may be the same or different.

3. In this application, "sending" and "receiving" indicate signal transmission directions. For example, "sending information to XX" may be understood as that a destination end of the information is XX, and may include direct sending through an air interface, or include indirect sending through an air interface by another unit or module. "Receiving information from YY" may be understood as that a source end of the information is YY, and may include direct receiving from YY through an air interface, or may include indirect receiving from YY through an air interface from another unit or module. "Sending" may also be understood as "outputting" of a chip interface, and "receiving" may also be understood as "inputting" of the chip interface. In other words, sending and receiving may be performed between devices, for example, between a network device and a terminal device; or may be performed inside a device, for example, sending or receiving between components, modules, chips, software modules, or hardware modules inside the device through a bus, a cable, or an interface.

Due to the relatively high path loss in millimeter-wave and terahertz frequency bands, beamforming techniques are typically used to concentrate signal energy for transmission in a specific direction or receive energy from a specific direction, to increase a coverage range. As a result of beamforming at both a transmitting side and a receiving side, communication links are susceptible to blockage, resulting in interruption. Therefore, 5G standards introduce a beam failure recovery procedure, in which available beams are dynamically maintained by continuously detecting beam quality, searching for candidate beams, sending a beam failure recovery request, and receiving a beam failure recovery response, to improve stability of the communication links.

The current beam failure recovery procedure is as follows: A terminal device performs beam failure detection, and starts to perform candidate beam detection upon determining that a beam failure has occurred. After selecting a candidate beam, the terminal device sends a beam failure recovery request to a network device, to request to use the selected candidate beam. Then, the network device sends a beam failure recovery response to the terminal device, to indicate confirmation to use the selected candidate beam.

In the foregoing beam failure recovery procedure, beam failure detection is first performed, and candidate beam detection is started only after it is determined that the beam fails, resulting in long latency of the beam failure recovery procedure. In addition, only one candidate beam is selected each time and a beam failure recovery request corresponding to the candidate beam is sent. If the network device determines that the candidate beam cannot be used as a new serving beam, a candidate beam needs to be reselected, and a beam failure recovery request corresponding to the candidate beam is sent. This process repeats until the network device determines that a candidate beam can be used as a new serving beam, or determines that none of candidate beams can be used as a new serving beam. Consequently, the manner of selecting the candidate beam further increases latency of beam failure recovery, and results in a low success rate.

For the foregoing beam failure recovery procedure, how to reduce detection latency and improve the success rate of beam failure recovery is to be studied.

To resolve this problem, this application provides corresponding embodiments. The following provides detailed descriptions.

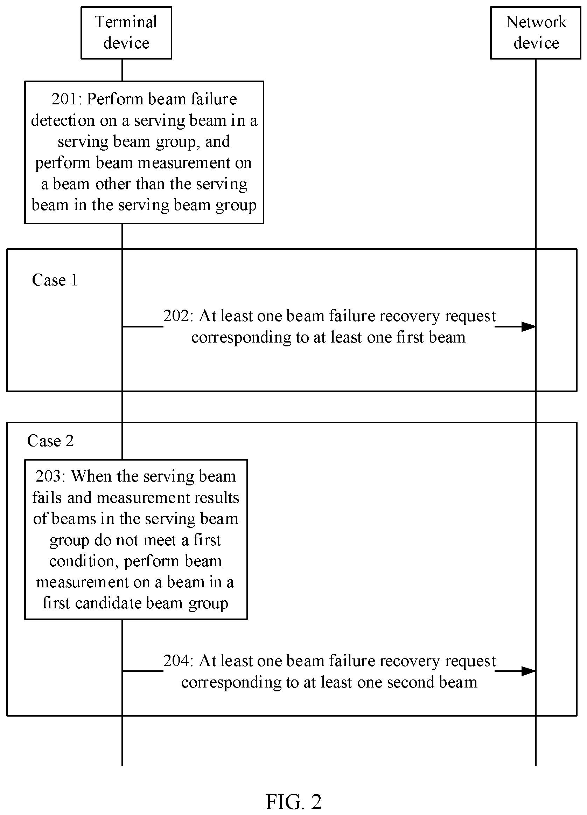

FIG. 2 is a schematic flowchart of a communication method according to an embodiment of this application. The method is performed by a network device or a module (for example, a chip) in the network device, and a terminal device or a module (for example, a chip) in the terminal device. The following uses an example in which the method is performed by the network device and the terminal device for description.

The method includes the following steps.

Step 201: The terminal device performs beam failure detection on a serving beam in a serving beam group, and performs beam measurement on a beam other than the serving beam in the serving beam group.

In this embodiment of this application, a plurality of beams are grouped to obtain a plurality of beam groups, and each beam group includes one or more beams. A beam group in which the serving beam of the terminal device is located is referred to as the serving beam group, and a beam group other than the serving beam group is referred to as a candidate beam group. For example, beams in the serving beam group are concurrent beams.

In step 201, the terminal device performs beam measurement on the beam other than the serving beam in the serving beam group while performing beam failure detection on the serving beam. In other words, the two operations, that is, beam failure detection and candidate beam detection, are performed at the same time. However, in an existing solution, beam failure detection is first performed, and candidate beam detection is performed only after it is determined that a serving beam fails. Therefore, in this solution in this application, latency of a beam failure recovery procedure can be reduced.

In an implementation, before step 201, the network device sends configuration information to the terminal device, where the configuration information indicates information about the plurality of beam groups, and the plurality of beam groups include the serving beam group and at least one candidate beam group. Information about each of the plurality of beam groups includes identification information of a beam in the beam group, or includes identification information and spatial angle information of a beam in the beam group. The spatial angle information includes azimuth (Azimuth) and/or zenith (Zenith) angles.

In this embodiment of this application, a beam may be used to send a synchronization signal/physical broadcast channel block (synchronization signal/physical broadcast channel block, SSB), a channel state information-reference signal (channel status information-reference signal, CSI-RS), a positioning reference signal (positioning reference signal, PRS), a tracking reference signal (tracking reference signal, TRS), a sensing reference signal (sensing reference signal, SERS), or the like. When beams in a beam group are concurrent beams, the plurality of beams in the beam group may be used to simultaneously send an SSB, a CSI-RS, a PRS, a TRS, or an SERS.

The following describes three different implementations of beam grouping.

Implementation 1: Beams that are adjacent in space domain are grouped into a same beam group. For example, a spatial angle distance between any two beams in each beam group is less than a fifth threshold.

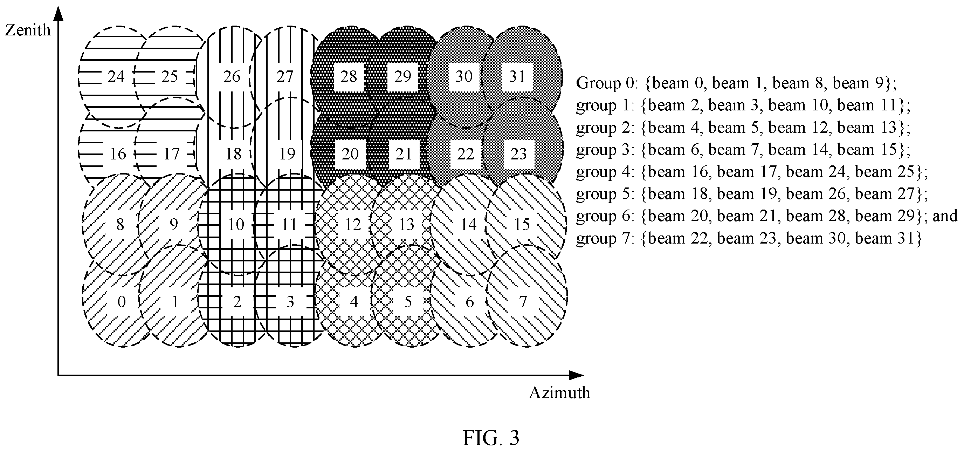

FIG. 3 is an example diagram of beam grouping. In this example, four beams that are adjacent in space domain may be grouped into a same beam group based on spatial angle information such as zenith and azimuth angles. Beams are grouped as follows:
group 0: {beam 0, beam 1, beam 8, beam 9};
group 1: {beam 2, beam 3, beam 10, beam 11};
group 2: {beam 4, beam 5, beam 12, beam 13};
group 3: {beam 6, beam 7, beam 14, beam 15};
group 4: {beam 16, beam 17, beam 24, beam 25};
group 5: {beam 18, beam 19, beam 26, beam 27};
group 6: {beam 20, beam 21, beam 28, beam 29}; and
group 7: {beam 22, beam 23, beam 30, beam 31}.

Implementation 2: Beams with a large spatial distance are grouped into a same beam group. For example, a spatial angle distance between any two beams in each beam group is greater than a sixth threshold.

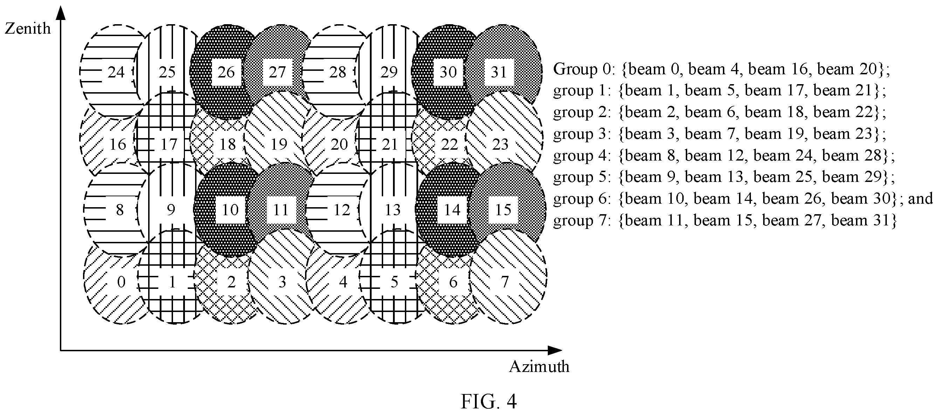

FIG. 4 is another example diagram of beam grouping. In this example, four beams with a large spatial distance may be grouped into a same beam group based on spatial angle information such as zenith and azimuth angles. Beams are grouped as follows:
group 0: {beam 0, beam 4, beam 16, beam 20};
group 1: {beam 1, beam 5, beam 17, beam 21};
group 2: {beam 2, beam 6, beam 18, beam 22};
group 3: {beam 3, beam 7, beam 19, beam 23};
group 4: {beam 8, beam 12, beam 24, beam 28};
group 5: {beam 9, beam 13, beam 25, beam 29};
group 6: {beam 10, beam 14, beam 26, beam 30}; and
group 7: {beam 11, beam 15, beam 27, beam 31}.

Implementation 3: Beams that can be concurrent are grouped into a same beam group, that is, beams in each beam group are concurrent beams.

In other words, a plurality of beams in a same beam group may be concurrently used for data transmission.

In an implementation, Implementation 1 may be implemented in combination with Implementation 3, and Implementation 2 may also be implemented in combination with Implementation 3.

After beam measurement is performed on the beam other than the serving beam in the serving beam group, there may be two cases.

In one case, there is an available beam in the serving beam group. The available beam herein means that a measurement result of the beam in the serving beam group meets a first condition. In this case, the following step 202 is performed after step 201, and the following step 203 and step 204 are not performed. In the other case, there is no available beam in the serving beam group. That is, measurement results of all beams in the serving beam group do not meet a first condition. In this case, the following step 203 and step 204 are performed after step 201, and step 202 is not performed. The following separately describes the two cases.

Step 202: When the serving beam fails and a measurement result of at least one first beam in the serving beam group meets the first condition, the terminal device sends, to the network device, at least one beam failure recovery request corresponding to the at least one first beam.

That the measurement result of the at least one first beam in the serving beam group meets the first condition may be understood as that the terminal device considers that the measurement result of the at least one first beam meets a requirement for being configured as a serving beam.

If measurement results of N first beams in the serving beam group meet the first condition, the terminal device sends N beam failure recovery requests to the network device, where the N beam failure recovery requests are in a one-to-one correspondence with the N first beams, and N is a positive integer. The beam failure recovery request is used to request to use the first beam to perform beam recovery, or is used to request to configure the first beam as a serving beam, or is used to request to use the first beam to perform data transmission. For example, if measurement results of two first beams in the serving beam group meet the first condition, and the two first beams are respectively referred to as a beam 1 and a beam 2, the terminal device sends a beam failure recovery request 1 and a beam failure recovery request 2 to the network device. The beam failure recovery request 1 is used to request to use the beam 1 to perform beam recovery, or is used to request to configure the beam 1 as a serving beam, or is used to request to use the beam 1 to perform data transmission. The beam failure recovery request 2 is used to request to use the beam 2 to perform beam recovery, or is used to request to configure the beam 2 as a serving beam, or is used to request to use the beam 2 to perform data transmission.

When the terminal device can send a plurality of beam failure recovery requests to the network device, a success rate of beam failure recovery can be improved.

For example, the first condition includes at least one of the following: (1) the measurement result of the first beam is greater than a first threshold; and (2) the at least one first beam includes a plurality of first beams, and a difference between measurement results of any two of the plurality of first beams is less than a second threshold. The first threshold and the second threshold may be preconfigured by the network device for the terminal device, or may be predefined in a protocol. In an example, measurement results of two beams other than the serving beam in the serving beam group are greater than the first threshold. In this case, beam failure recovery requests corresponding to the two beams may be sent to the network device. In this example, only the measurement results of the beams need to be greater than the first threshold, and a difference between the measurement results of the two beams does not need to be less than the second threshold. In another example, measurement results of two beams other than the serving beam in the serving beam group are greater than the first threshold, and a difference between the measurement results of the two beams is less than the second threshold. In this case, beam failure recovery requests corresponding to the two beams may be sent to the network device. If the measurement results of the two beams are greater than the first threshold, but the difference between the measurement results of the two beams is greater than or equal to the second threshold, the terminal device does not send, to the network device, the beam failure recovery requests corresponding to the two beams, or sends, to the network device, a beam failure recovery request corresponding to only one of the beams. In other words, in this example, if beam failure recovery requests corresponding to a plurality of beams need to be sent, measurement results of the plurality of beams need to be greater than the first threshold, and a difference between measurement results of any two of the plurality of beams further needs to be less than the second threshold, that is, the measurement results of the plurality of beams are close.

In an implementation, in step 202, that the terminal device sends, to the network device, the at least one beam failure recovery request corresponding to the at least one first beam may be: The terminal device sends the at least one beam failure recovery request to the network device on at least one random access channel (random access channel, RACH) corresponding to the at least one first beam, where the at least one RACH is in a one-to-one correspondence with the at least one first beam. After receiving the at least one beam recovery request, the network device determines a first beam that can be used as a serving beam, where the first beam that can be used as the serving beam in the at least one first beam is referred to as a target beam. For example, if a sequence correlation value of a RACH corresponding to a first beam is greater than a sequence threshold, the first beam is determined as a target beam, that is, the first beam can be used as a serving beam. After determining at least one target beam, the network device sends, to the terminal device in common search space (common search space, CSS) corresponding to the at least one target beam, at least one beam failure recovery response corresponding to the at least one target beam, where the at least one target beam is in a one-to-one correspondence with the at least one beam failure recovery response. The terminal device detects a beam failure recovery response in common search space associated with the at least one first beam. The following provides descriptions with reference to a specific example. For example, the terminal device determines that a beam 1, a beam 2, and a beam 3 in the serving beam group meet the first condition. In this case, the terminal device sends a beam failure recovery request 1 to the network device on a RACH 1 corresponding to the beam 1, sends a beam failure recovery request 2 to the network device on a RACH 2 corresponding to the beam 2, and sends a beam failure recovery request 3 to the network device on a RACH 3 corresponding to the beam 3. The network device determines that sequence correlation values of the RACH 1 and the RACH 2 are greater than the sequence threshold. In this case, the network device sends, to the terminal device in common search space corresponding to the beam 1, a beam failure recovery response 1 corresponding to the beam failure recovery request 1, and sends, to the terminal device in common search space corresponding to the beam 2, a beam failure recovery response 2 corresponding to the beam failure recovery request 2. The terminal device detects a beam failure recovery response in common search space corresponding to the beam 1, the beam 2, and the beam 3. Finally, the terminal device may detect the beam failure recovery responses in the common search space corresponding to the beam 1 and the beam 2, to determine that the beam 1 and the beam 2 can be used as serving beams.

Step 203: When the serving beam fails and measurement results of the beams in the serving beam group do not meet the first condition, the terminal device performs beam measurement on a beam in a first candidate beam group.

In another implementation, the terminal device may perform beam measurement on a beam in the first candidate beam group while performing beam measurement on a beam in the serving beam group. In other words, the terminal device performs beam measurement on a beam in the serving beam group and a beam in the first candidate beam group at the same time. In this way, the latency of the beam failure recovery procedure can be further reduced.

The first candidate beam group is one of the at least one candidate beam group configured by the network device. For example, the first candidate beam group is a candidate beam group having a largest spatial angle distance among the at least one candidate beam group configured by the network device. The following describes four different definition manners of the spatial angle distance.

Definition manner 1: The spatial angle distance is a distance between an angle center of the candidate beam group and an angle center of the serving beam group.

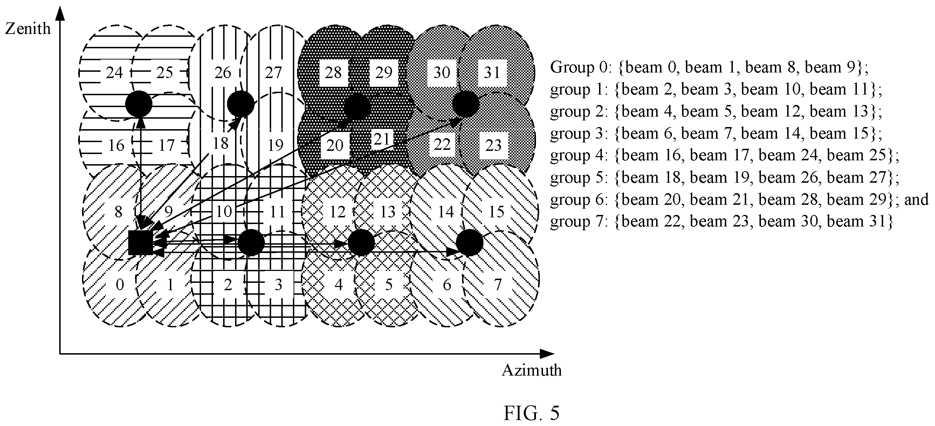

FIG. 5 is an example diagram of a spatial angle distance. In this example, it is assumed that a beam group 0 is the serving beam group and a beam 0 is the serving beam. In addition, the spatial angle distance is defined as the distance between the angle center of the candidate beam group and the angle center of the serving beam group. In the example in FIG. 5, a black dot represents an angle center of each candidate beam group, and a black square represents the angle center of the serving beam group. An angle center of a candidate beam group may be obtained through calculation based on spatial angle information of each beam in the candidate beam group, and the angle center of the serving beam group may be obtained through calculation based on spatial angle information of each beam in the serving beam group.

The example in FIG. 5 is used as an example. The beam group 0 is the serving beam group, a beam group 1 to a beam group 7 are all candidate beam groups, and a value relationship between spatial angle distances of the seven candidate beam groups is: beam group 7 > beam group 3 > beam group 6 > beam group 2 > beam group 5 > beam group 4 = beam group 1. Therefore, the beam group 7 can be used as the first candidate beam group.

Definition manner 2: The spatial angle distance is a distance between an angle center of the candidate beam group and an angle center of the serving beam.

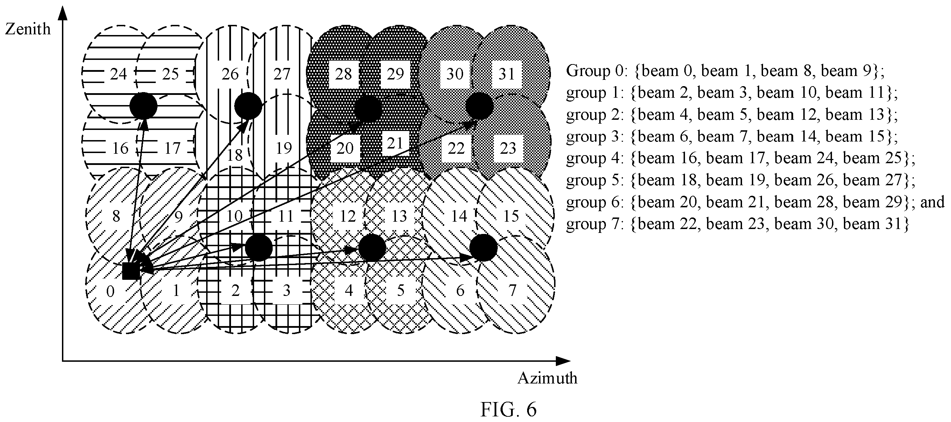

FIG. 6 is another example diagram of a spatial angle distance. In this example, it is assumed that a beam group 0 is the serving beam group and a beam 0 is the serving beam. In addition, the spatial angle distance is defined as the distance between the angle center of the candidate beam group and the angle center of the serving beam group. In the example in FIG. 6, a black dot represents an angle center of each candidate beam group, and a black square represents the angle center of the serving beam. An angle center of a candidate beam group may be obtained through calculation based on spatial angle information of each beam in the candidate beam group, and the angle center of the serving beam may be obtained through calculation based on spatial angle information of the serving beam.

Definition manner 3: The spatial angle distance is a distance between any angle within half-power coverage of the candidate beam group and an angle center of the serving beam group.

In this application, the half-power coverage may also be referred to as a half-power coverage angle or a half-power angle, and is an antenna angle within a range in which power is reduced by half in antenna coverage. For example, radiation intensity on two sides of a maximum radiation direction of a main lobe beam in the candidate beam group gradually decreases. When the radiation intensity decreases by 3 decibels (dB), power decreases by half. In this case, an included angle formed by directions when the power on the two sides of the main lobe beam decreases by half is the half-power coverage of the candidate beam group.

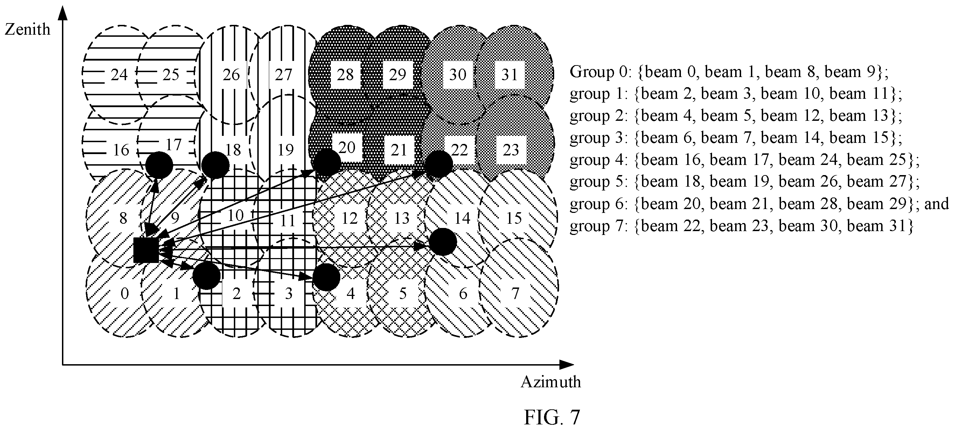

FIG. 7 is another example diagram of a spatial angle distance. In this example, it is assumed that a beam group 0 is the serving beam group and a beam 0 is the serving beam. In addition, the spatial angle distance is defined as the distance between any angle within the half-power coverage of the candidate beam group and the angle center of the serving beam group, and the any angle is an angle that is in the candidate beam group and that is closest to the angle center of the serving beam group. In the example in FIG. 7, a black dot represents an angle that is in each candidate beam group and that is closest to the angle center of the serving beam group, and a black square represents the angle center of the serving beam group. An angle that is in a candidate beam group and that is closest to the angle center of the serving beam group may be obtained through calculation based on spatial angle information of each beam in the candidate beam group and the angle center of the serving beam group, and the angle center of the serving beam group may be obtained through calculation based on spatial angle information of each beam in the serving beam group.

Definition manner 4: The spatial angle distance is a distance between any angle within half-power coverage of the candidate beam group and an angle center of the serving beam.

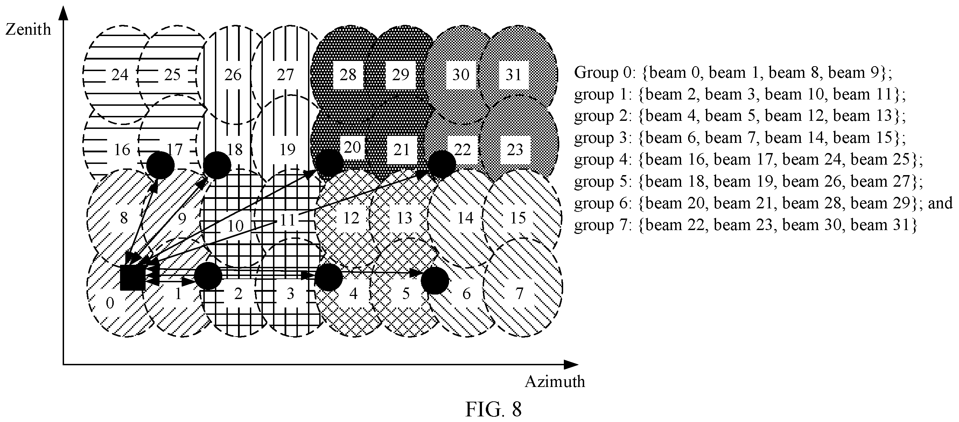

FIG. 8 is another example diagram of a spatial angle distance. In this example, it is assumed that a beam group 0 is the serving beam group and a beam 0 is the serving beam. In addition, the spatial angle distance is defined as the distance between any angle within the half-power coverage of the candidate beam group and the angle center of the serving beam, and the any angle is an angle that is in the candidate beam group and that is closest to the angle center of the serving beam. In the example in FIG. 8, a black dot represents an angle that is in each candidate beam group and that is closest to the angle center of the serving beam, and a black square represents the angle center of the serving beam. An angle that is in a candidate beam group and that is closest to the angle center of the serving beam may be obtained through calculation based on spatial angle information of each beam in the candidate beam group and the angle center of the serving beam, and the angle center of the serving beam may be obtained through calculation based on spatial angle information of the serving beam.

Step 204: When a measurement result of at least one second beam in the first candidate beam group meets a second condition, the terminal device sends, to the network device, at least one beam failure recovery request corresponding to the at least one second beam.

That the measurement result of the at least one second beam in the first candidate beam group meets the second condition may be understood as that the terminal device considers that the measurement result of the at least one second beam meets a requirement for being configured as a serving beam.

If measurement results of M second beams in the first candidate beam group meet the second condition, the terminal device sends M beam failure recovery requests to the network device, where the M beam failure recovery requests are in a one-to-one correspondence with the M second beams, and M is a positive integer. The beam failure recovery request is used to request to use the second beam to perform beam recovery, or is used to request to configure the second beam as a serving beam, or is used to request to use the second beam to perform data transmission. For example, if measurement results of two second beams in the first candidate beam group meet the second condition, and the two second beams are respectively referred to as a beam 1 and a beam 2, the terminal device sends a beam failure recovery request 1 and a beam failure recovery request 2 to the network device. The beam failure recovery request 1 is used to request to use the beam 1 to perform beam recovery, or is used to request to configure the beam 1 as a serving beam, or is used to request to use the beam 1 to perform data transmission. The beam failure recovery request 2 is used to request to use the beam 2 to perform beam recovery, or is used to request to configure the beam 2 as a serving beam, or is used to request to use the beam 2 to perform data transmission.

When the terminal device can send a plurality of beam failure recovery requests to the network device, a success rate of beam failure recovery can be improved.

For example, the second condition includes at least one of the following: (1) the measurement result of the second beam is greater than a third threshold; and (2) the at least one second beam includes a plurality of second beams, and a difference between measurement results of any two of the plurality of second beams is less than a fourth threshold. The third threshold and the fourth threshold may be preconfigured by the network device for the terminal device, or may be predefined in a protocol. In an example, measurement results of two beams in the first candidate beam group are greater than the third threshold. In this case, beam failure recovery requests corresponding to the two beams may be sent to the network device. In this example, only the measurement results of the beams need to be greater than the third threshold, and a difference between the measurement results of the two beams does not need to be less than the fourth threshold. In another example, measurement results of two beams in the first candidate beam group are greater than the third threshold, and a difference between the measurement results of the two beams is less than the fourth threshold. In this case, beam failure recovery requests corresponding to the two beams may be sent to the network device. If the measurement results of the two beams are greater than the third threshold, but the difference between the measurement results of the two beams is greater than or equal to the fourth threshold, the terminal device does not send, to the network device, the beam failure recovery requests corresponding to the two beams, or sends, to the network device, a beam failure recovery request corresponding to only one of the beams. In other words, in this example, if beam failure recovery requests corresponding to a plurality of beams need to be sent, measurement results of the plurality of beams need to be greater than the third threshold, and a difference between measurement results of any two of the plurality of beams further needs to be less than the fourth threshold, that is, the measurement results of the plurality of beams are close.

In an implementation, in step 204, that the terminal device sends, to the network device, the at least one beam failure recovery request corresponding to the at least one second beam may be: The terminal device sends the at least one beam failure recovery request to the network device on at least RACH corresponding to the at least one second beam, where the at least one RACH is in a one-to-one correspondence with the at least one second beam. After receiving the at least one beam recovery request, the network device determines a second beam that can be used as a serving beam, where the second beam that can be used as the serving beam in the at least one second beam is referred to as a target beam. For example, if a sequence correlation value of a RACH corresponding to a second beam is greater than a sequence threshold, the second beam is determined as a target beam, that is, the second beam can be used as a serving beam. After determining at least one target beam, the network device sends, to the terminal device in common search space corresponding to the at least one target beam, at least one beam failure recovery response corresponding to the at least one target beam, where the at least one target beam is in a one-to-one correspondence with the at least one beam failure recovery response. The terminal device detects a beam failure recovery response in common search space associated with the at least one second beam. The following provides descriptions with reference to a specific example. For example, the terminal device determines that a beam 1, a beam 2, and a beam 3 in the first candidate beam group meet the second condition. In this case, the terminal device sends a beam failure recovery request 1 to the network device on a RACH 1 corresponding to the beam 1, sends a beam failure recovery request 2 to the network device on a RACH 2 corresponding to the beam 2, and sends a beam failure recovery request 3 to the network device on a RACH 3 corresponding to the beam 3. The network device determines that sequence correlation values of the RACH 1 and the RACH 2 are greater than the sequence threshold. In this case, the network device sends, to the terminal device in common search space corresponding to the beam 1, a beam failure recovery response 1 corresponding to the beam failure recovery request 1, and sends, to the terminal device in common search space corresponding to the beam 2, a beam failure recovery response 2 corresponding to the beam failure recovery request 2. The terminal device detects a beam failure recovery response in common search space corresponding to the beam 1, the beam 2, and the beam 3. Finally, the terminal device may detect the beam failure recovery responses in the common search space corresponding to the beam 1 and the beam 2, to determine that the beam 1 and the beam 2 can be used as serving beams.

In an implementation, when the serving beam fails, the measurement results of the beams in the serving beam group do not meet the first condition, and the measurement results of the beams in the first candidate beam group do not meet the second condition, the terminal device sequentially selects, based on the spatial angle distances, a candidate beam group having a largest spatial angle distance among remaining candidate beam groups to perform beam measurement, until the selected candidate beam group includes a candidate beam that meets the condition, or until none of the beams in the candidate beam groups meets the condition. After selecting a beam that meets the condition, the terminal device sends, to the network device, a beam failure recovery request corresponding to the selected beam.

It should be noted that a value relationship between the first threshold, the second threshold, the third threshold, the fourth threshold, the fifth threshold, and the sixth threshold is not limited in this embodiment of this application. The numbers such as "first" and "second" herein are merely used to distinguish various thresholds from each other, and do not constitute a limitation on meanings.

It may be understood that, to implement functions in the foregoing embodiments, the terminal device or the network device includes corresponding hardware structures and/or software modules for performing the functions. A person skilled in the art should be easily aware that, in combination with the units and the method steps in the examples described in embodiments disclosed in this application, this application can be implemented through hardware or a combination of hardware and computer software. Whether a function is performed through hardware or hardware driven by computer software depends on particular application scenarios and design constraint conditions of the technical solutions.

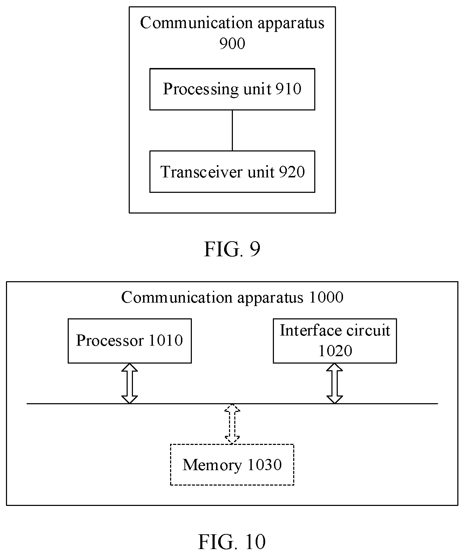

FIG. 9 and FIG. 10 are diagrams of a structure of a possible communication apparatus according to an embodiment of this application. The communication apparatuses may be configured to implement functions of the terminal device or the network device in the foregoing method embodiments. Therefore, beneficial effects of the foregoing method embodiments can also be implemented. In embodiments of this application, the communication apparatus may be a terminal device, a network device, or a module (for example, a chip) used in the terminal device or the network device.

The communication apparatus 900 shown in FIG. 9 includes a processing unit 910 and a transceiver unit 920. The communication apparatus 900 is configured to implement functions of the terminal device or the network device in the foregoing method embodiments.

When the communication apparatus 900 is configured to implement the functions of the terminal device in the foregoing method embodiments, the processing unit 910 is configured to: perform beam failure detection on a serving beam in a serving beam group, and perform beam measurement on a beam other than the serving beam in the serving beam group; and the transceiver unit 920 is configured to: when the serving beam fails and a measurement result of at least one first beam in the serving beam group meets a first condition, send, to a network device, at least one beam failure recovery request corresponding to the at least one first beam.

In a possible implementation, the processing unit 910 is further configured to detect a beam failure recovery response in common search space associated with the at least one first beam.

In a possible implementation, beams in the serving beam group are concurrent beams.

In a possible implementation, the first condition includes at least one of the following: the measurement result of the first beam is greater than a first threshold; and the at least one first beam includes a plurality of first beams, and a difference between measurement results of any two of the plurality of first beams is less than a second threshold.

In a possible implementation, the processing unit 910 is further configured to: when the serving beam fails and measurement results of the beams in the serving beam group do not meet the first condition, perform beam measurement on a beam in a first candidate beam group. The transceiver unit 920 is further configured to: when a measurement result of at least one second beam in the first candidate beam group meets a second condition, send, to the network device, at least one beam failure recovery request corresponding to the at least one second beam.

In a possible implementation, the processing unit 910 is further configured to detect a beam failure recovery response in common search space associated with the at least one second beam.

In a possible implementation, the second condition includes at least one of the following: the measurement result of the second beam is greater than a third threshold; and the at least one second beam includes a plurality of second beams, and a difference between measurement results of any two of the plurality of second beams is less than a fourth threshold.

In a possible implementation, the first candidate beam group is a candidate beam group having a largest spatial angle distance among at least one candidate beam group, where the spatial angle distance is a distance between any angle within half-power coverage of the candidate beam group and an angle center of the serving beam group; the spatial angle distance is a distance between any angle within half-power coverage of the candidate beam group and an angle center of the serving beam; the spatial angle distance is a distance between an angle center of the candidate beam group and an angle center of the serving beam group; or the spatial angle distance is a distance between an angle center of the candidate beam group and an angle center of the serving beam.

In a possible implementation, the transceiver unit 920 is further configured to receive configuration information from the network device, where the configuration information indicates information about a plurality of beam groups, the information about the plurality of beam groups includes identification information of beams in the plurality of beam groups, or includes identification information and spatial angle information of beams in the plurality of beam groups, and the plurality of beam groups include the serving beam group and the at least one candidate beam group.

In a possible implementation, a spatial angle distance between any two beams in each of the plurality of beam groups is less than a fifth threshold; a spatial angle distance between any two beams in each of the plurality of beam groups is greater than a sixth threshold; or beams in each of the plurality of beam groups are concurrent beams.

When the communication apparatus 900 is configured to implement the functions of the network device in the foregoing method embodiments, the processing unit 910 is configured to control the transceiver unit 920 to send configuration information to a terminal device, where the configuration information indicates information about a plurality of beam groups, the information about the plurality of beam groups includes identification information of beams in the plurality of beam groups, or includes identification information and spatial angle information of beams in the plurality of beam groups, and the plurality of beam groups include a serving beam group and at least one candidate beam group of the terminal device; and receive, from the terminal device, at least one beam failure recovery request corresponding to at least one first beam in the serving beam group, where a measurement result of the at least one first beam meets a first condition; or receive, from the terminal device, at least one beam failure recovery request corresponding to at least one second beam in a first candidate beam group, where a measurement result of the at least one second beam meets a second condition, and the first candidate beam group belongs to the at least one candidate beam group.

In a possible implementation, beams in the serving beam group are concurrent beams.

In a possible implementation, the first condition includes at least one of the following: the measurement result of the first beam is greater than a first threshold; and the at least one first beam includes a plurality of first beams, and a difference between measurement results of any two of the plurality of first beams is less than a second threshold.

In a possible implementation, the second condition includes at least one of the following: the measurement result of the second beam is greater than a third threshold; and the at least one second beam includes a plurality of second beams, and a difference between measurement results of any two of the plurality of second beams is less than a fourth threshold.

In a possible implementation, the first candidate beam group is a candidate beam group having a largest spatial angle distance among the at least one candidate beam group, where the spatial angle distance is a distance between any angle within half-power coverage of the candidate beam group and an angle center of the serving beam group; the spatial angle distance is a distance between any angle within half-power coverage of the candidate beam group and an angle center of a serving beam in the serving beam group; the spatial angle distance is a distance between an angle center of the candidate beam group and an angle center of the serving beam group; or the spatial angle distance is a distance between an angle center of the candidate beam group and an angle center of a serving beam in the serving beam group.

In a possible implementation, a spatial angle distance between any two beams in each of the plurality of beam groups is less than a fifth threshold; a spatial angle distance between any two beams in each of the plurality of beam groups is greater than a sixth threshold; or beams in each of the plurality of beam groups are concurrent beams.

In a possible implementation, that the processing unit 910 is configured to control the transceiver unit 920 to receive, from the terminal device, the at least one beam failure recovery request corresponding to the at least one first beam in the serving beam group specifically includes: controlling the transceiver unit 920 to receive the at least one beam failure recovery request on at least one RACH, where the at least one RACH is in a one-to-one correspondence with the at least one first beam. The processing unit 910 is further configured to control the transceiver unit 920 to send, to the terminal device in common search space corresponding to at least one target beam in the at least one first beam, at least one beam failure recovery response corresponding to the at least one target beam, where a sequence correlation value of a RACH corresponding to the at least one target beam is greater than a sequence threshold.

In a possible implementation, that the processing unit 910 is configured to control the transceiver unit 920 to receive, from the terminal device, the at least one beam failure recovery request corresponding to the at least one first beam in the serving beam group specifically includes: controlling the transceiver unit 920 to receive the at least one beam failure recovery request on at least one RACH, where the at least one RACH is in a one-to-one correspondence with the at least one second beam. The processing unit 910 is further configured to control the transceiver unit 920 to send, to the terminal device in common search space corresponding to at least one target beam in the at least one second beam, at least one beam failure recovery response corresponding to the at least one target beam, where a sequence correlation value of a RACH corresponding to the at least one target beam is greater than a sequence threshold.

For more detailed descriptions of the processing unit 910 and the transceiver unit 920, directly refer to related descriptions in the foregoing method embodiments. Details are not described herein again.

The communication apparatus 1000 shown in FIG. 10 includes a processor 1010 and an interface circuit 1020. The processor 1010 and the interface circuit 1020 are coupled to each other. It may be understood that the interface circuit 1020 may be a transceiver or an input/output interface. Optionally, the communication apparatus 1000 may further include a memory 1030, configured to: store instructions executed by the processor 1010, or store input data required by the processor 1010 to run the instructions, or store data generated after the processor 1010 runs the instructions.

When the communication apparatus 1000 is configured to implement the foregoing method embodiments, the processor 1010 is configured to implement functions of the foregoing processing unit 910, and the interface circuit 1020 is configured to implement functions of the foregoing transceiver unit 920.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, and a compact disc read-only memory (compact disc read-only memory, CD-ROM) or any other form of storage medium well known in the art. For example, a storage medium is coupled to the processor, so that the processor can read information from the storage medium and write information into the storage medium. Certainly, the storage medium may be a component of the processor. The processor and the storage medium may be disposed in an ASIC. In addition, the ASIC may be located in a terminal device or a network device. Certainly, the processor and the storage medium may alternatively exist in an access network device or a terminal as discrete components.

All or a part of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. The computer program (computer program) is a set of instructions that indicate each step of an electronic computer or another device having a message processing capability, and is usually written in a program design language and run on a target architecture. When the computer programs or instructions are loaded and executed on a computer, procedures or functions in embodiments of this application are all or partially executed. The computer may be a general-purpose computer, a dedicated computer, a computer network, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

In this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. In text descriptions of this application, the character "/" usually indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, wherein the method comprises:
performing beam failure detection on a serving beam in a serving beam group, and performing beam measurement on a beam other than the serving beam in the serving beam group; and
when the serving beam fails and a measurement result of at least one first beam in the serving beam group meets a first condition, sending, to a network device, at least one beam failure recovery request corresponding to the at least one first beam.

2. The method according to claim 1, wherein the method further comprises:
detecting a beam failure recovery response in common search space associated with the at least one first beam.

3. The method according to claim 1 or 2, wherein beams in the serving beam group are concurrent beams.

4. The method according to any one of claims 1 to 3, wherein the first condition comprises at least one of the following:
the measurement result of the first beam is greater than a first threshold; and
the at least one first beam comprises a plurality of first beams, and a difference between measurement results of any two of the plurality of first beams is less than a second threshold.

5. The method according to any one of claims 1 to 4, wherein the method further comprises:
when the serving beam fails and measurement results of the beams in the serving beam group do not meet the first condition, performing beam measurement on a beam in a first candidate beam group; and
when a measurement result of at least one second beam in the first candidate beam group meets a second condition, sending, to the network device, at least one beam failure recovery request corresponding to the at least one second beam.

6. The method according to claim 5, wherein the method further comprises:
detecting a beam failure recovery response in common search space associated with the at least one second beam.

7. The method according to claim 5 or 6, wherein the second condition comprises at least one of the following:
the measurement result of the second beam is greater than a third threshold; and
the at least one second beam comprises a plurality of second beams, and a difference between measurement results of any two of the plurality of second beams is less than a fourth threshold.

8. The method according to any one of claims 5 to 7, wherein the first candidate beam group is a candidate beam group having a largest spatial angle distance among at least one candidate beam group, wherein
the spatial angle distance is a distance between any angle within half-power coverage of the candidate beam group and an angle center of the serving beam group;
the spatial angle distance is a distance between any angle within half-power coverage of the candidate beam group and an angle center of the serving beam;
the spatial angle distance is a distance between an angle center of the candidate beam group and an angle center of the serving beam group; or
the spatial angle distance is a distance between an angle center of the candidate beam group and an angle center of the serving beam.

9. The method according to claim 8, wherein the method further comprises:
receiving configuration information from the network device, wherein the configuration information indicates information about a plurality of beam groups, the information about the plurality of beam groups comprises identification information of beams in the plurality of beam groups, or comprises identification information and spatial angle information of beams in the plurality of beam groups, and the plurality of beam groups comprise the serving beam group and the at least one candidate beam group.

10. The method according to claim 9, wherein a spatial angle distance between any two beams in each of the plurality of beam groups is less than a fifth threshold;
a spatial angle distance between any two beams in each of the plurality of beam groups is greater than a sixth threshold; or
beams in each of the plurality of beam groups are concurrent beams.

11. A communication method, wherein the method comprises:
sending configuration information to a terminal device, wherein the configuration information indicates information about a plurality of beam groups, the information about the plurality of beam groups comprises identification information of beams in the plurality of beam groups, or comprises identification information and spatial angle information of beams in the plurality of beam groups, and the plurality of beam groups comprise a serving beam group and at least one candidate beam group of the terminal device; and
receiving, from the terminal device, at least one beam failure recovery request corresponding to at least one first beam in the serving beam group, wherein a measurement result of the at least one first beam meets a first condition; or
receiving, from the terminal device, at least one beam failure recovery request corresponding to at least one second beam in a first candidate beam group, wherein a measurement result of the at least one second beam meets a second condition, and the first candidate beam group belongs to the at least one candidate beam group.

12. The method according to claim 11, wherein beams in the serving beam group are concurrent beams.

13. The method according to claim 11 or 12, wherein the first condition comprises at least one of the following:
the measurement result of the first beam is greater than a first threshold; and
the at least one first beam comprises a plurality of first beams, and a difference between measurement results of any two of the plurality of first beams is less than a second threshold.

14. The method according to any one of claims 11 to 13, wherein the second condition comprises at least one of the following:
the measurement result of the second beam is greater than a third threshold; and
the at least one second beam comprises a plurality of second beams, and a difference between measurement results of any two of the plurality of second beams is less than a fourth threshold.

15. The method according to any one of claims 11 to 14, wherein the first candidate beam group is a candidate beam group having a largest spatial angle distance among the at least one candidate beam group, wherein
the spatial angle distance is a distance between any angle within half-power coverage of the candidate beam group and an angle center of the serving beam group;
the spatial angle distance is a distance between any angle within half-power coverage of the candidate beam group and an angle center of a serving beam in the serving beam group;
the spatial angle distance is a distance between an angle center of the candidate beam group and an angle center of the serving beam group; or
the spatial angle distance is a distance between an angle center of the candidate beam group and an angle center of a serving beam in the serving beam group.

16. The method according to any one of claims 11 to 15, wherein a spatial angle distance between any two beams in each of the plurality of beam groups is less than a fifth threshold;
a spatial angle distance between any two beams in each of the plurality of beam groups is greater than a sixth threshold; or
beams in each of the plurality of beam groups are concurrent beams.

17. The method according to any one of claims 11 to 16, wherein receiving, from the terminal device, the at least one beam failure recovery request corresponding to the at least one first beam in the serving beam group comprises:
receiving the at least one beam failure recovery request on at least one random access channel RACH, wherein the at least one RACH is in a one-to-one correspondence with the at least one first beam; and
the method further comprises:
sending, to the terminal device in common search space corresponding to at least one target beam in the at least one first beam, at least one beam failure recovery response corresponding to the at least one target beam, wherein a sequence correlation value of a RACH corresponding to the at least one target beam is greater than a sequence threshold.

18. The method according to any one of claims 11 to 16, wherein receiving, from the terminal device, the at least one beam failure recovery request corresponding to the at least one second beam in the first candidate beam group comprises:
receiving the at least one beam failure recovery request on at least one random access channel RACH, wherein the at least one RACH is in a one-to-one correspondence with the at least one second beam; and
the method further comprises:
sending, to the terminal device in common search space corresponding to at least one target beam in the at least one second beam, at least one beam failure recovery response corresponding to the at least one target beam, wherein a sequence correlation value of a RACH corresponding to the at least one target beam is greater than a sequence threshold.

19. A communication apparatus, comprising a module configured to perform the method according to any one of claims 1 to 10 or the method according to any one of claims 11 to 18.

20. A communication apparatus, comprising a processor and an interface circuit, wherein the processor is configured to: communicate with another apparatus through the interface circuit, and perform the method according to any one of claims 1 to 10 or the method according to any one of claims 11 to 18.

21. A computer program product, wherein the computer program product comprises instructions, and when the instructions are run on a processor, the processor is enabled to perform the method according to any one of claims 1 to 10 or the method according to any one of claims 11 to 18.

22. A computer-readable storage medium, wherein the storage medium stores a computer program or instructions, and when the computer program or the instructions are executed by a communication apparatus, the method according to any one of claims 1 to 10 or the method according to any one of claims 11 to 18 is implemented.

23. A chip system, comprising a processor, wherein the processor is configured to perform the method according to any one of claims 1 to 10 or the method according to any one of claims 11 to 18.
